# EUROPEAN PATENT SPECIFICATION

(11) **EP 3 005 079 B1**
(45) Date of publication and mention of the grant of the patent: **17.11.2021**
(21) Application number: 14803579.3
(22) Date of filing: 27.05.2014
(51) Int. Cl.: G06F 9/305, G06F 13/14, G06F 3/06, G06F 13/16, G06F 13/38

(54) **ON-THE-FLY PERFORMANCE ADJUSTMENT FOR SOLID STATE STORAGE DEVICES**
SOFORTIGE ANPASSUNG DES LEISTUNGSVERMÖGENS FÜR FESTKÖRPERSPEICHERVORRICHTUNGEN
RÉGLAGE DE PERFORMANCES À LA VOLÉE POUR DISPOSITIFS DE STOCKAGE À SEMI-CONDUCTEUR

(30) Priority: 31.05.2013 US 201361829983 P; 27.06.2013 US 201313929708
(43) Date of publication of application: 13.04.2016
(73) Proprietor: Intel Corporation, Santa Clara, CA 95054 (US)
(72) Inventor: RAGLAND, Daniel J., Hillsboro, Oregon 97123 (US); SALESKI, Christopher E., Portland, Oregon 97210 (US); MANGOLD, Richard P., Forest Grove, Oregon 97116 (US); YI, Chun L., Santa Clara, CA 95054 (US); ALEKAL, Pranava Y., Hillsboro, Oregon 97214 (US); SOUTHERN, Kevin, Aloha, Oregon 97007 (US)
(74) Representative: Goddar, Heinz J.
(86) International application number: PCT/US2014/039594
(87) International publication number: WO 2014/193844

(56) References cited:
- US-A1- 2005 120 144
- US-A1- 2009 307 416
- US-A1- 2010 274 933
- US-A1- 2012 278 540
- US-A1- 2012 303 873
- US-B1- 6 185 692
- US-B2- 8 214 580

## Description

### FIELD

The present disclosure generally relates to the field of electronics. More particularly, some embodiments of the invention generally relate to on-the-fly performance adjustment techniques for solid state storage devices.

### BACKGROUND

Generally, memory used to store data in a computing system can be volatile (to store volatile information) or non-volatile (to store persistent information). Volatile data structures stored in volatile memory are used for temporary or intermediate information that is required to support the functionality of a program during the run-time of the program. On the other hand, persistent data structures stored in non-volatile memory are available beyond the run-time of a program and can be reused. Moreover, new data is typically generated as volatile data first, before the user or programmer decides to make the data persistent. For example, programmers or users may cause mapping (i.e., instantiating) of volatile structures in volatile main memory that is directly accessible by a processor. Persistent data structures, on the other hand, are instantiated on non-volatile storage devices like rotating disks attached to Input/Output (I/O or 10) buses or non-volatile memory based devices like flash memory.

To increase performance, some systems may utilize a Solid State Drive (SSD) that includes non-volatile memory such as flash memory to provide a non-volatile storage solution. Such SSDs generally take less space, weigh less, and are faster than more traditional hard disk drives (HDDs). Furthermore, hard disk drives provide a relatively low-cost storage solution and are used in many computing devices to provide non-volatile storage. Hard disk drives, however, can use a lot of power when compared to Solid State Drives since a hard disk drive needs to spin its rotating disks at a relatively high speed and move disk heads relative to the spinning disks to read/write data. All this physical movement generates heat and increases power consumption.

To this end, some mobile devices are migrating towards solid state drives. Also, some stationary computing systems (such as desktops, workstations, servers, etc.) may utilize such solid state drives to improve performance. However, utilizing the same usage model for solid state drives in different types of computing devices may not always result in an optimal balance between performance and reliability.

Document US 2010/0274933 A1 discloses a solid state disc drive. The drive comprises a memory device and a controller. The controller is coupled to the memory device, accesses the memory device according to a clock signal, estimates a work load of the memory device, and adjust a frequency of the clock signal in accordance with the estimated work load.

Document US 6,185,692 B1 discloses a data processing system and a method for dynamically setting bus clock frequency in response to a number of loads. The data processing system includes a bus, one or more loads coupled to the bus, and a clock generator. The clock generator generates a bus clock signal that is coupled to at least one of the loads. While the clock generator is generating a bus clock signal having a first frequency, the number of loads connected to the bus is determined. In response to this determination, the frequency of the bus clock signal is automatically changed from the first frequency to a second frequency. In one embodiment in which the bus is a PCI local bus having a plurality of slots, the determination of the number of loads is made by examining at least one storage location associated with each of a plurality of slots.

### SUMMARY

An apparatus according to claim 1, a method according to claim 4 and a machine readable storage according to claim 8 are provided. Further embodiments are subject matter of dependent claims.

### BRIEF DESCRIPTION OF THE DRAWINGS

The detailed description is provided with reference to the accompanying figures. In the figures, the left-most digit(s) of a reference number identifies the figure in which the reference number first appears. The use of the same reference numbers in different figures indicates similar or identical items.
Figs. 1, 5, and 6-7 illustrate block diagrams of computing systems, which may be utilized to implement the invention, discussed herein.
Fig. 2 illustrates a flow diagram according to an embodiment.
Fig. 3 illustrates a sample user interface to provide control over tuning of a solid state storage device, according to an embodiment.
Figs. 4 and 4A illustrate flow diagrams according to some examples useful for understanding the invention.
Fig. 4B illustrates a block diagram of various components of an SSD, according to an embodiment.

### DETAILED DESCRIPTION

In the following description, numerous specific details are set forth in order to provide a thorough understanding of various embodiments. However, various embodiments of the invention may be practiced without the specific details. In other instances, well-known methods, procedures, components, and circuits have not been described in detail so as not to obscure the particular embodiments of the invention. Further, various aspects of embodiments of the invention may be performed using various means, such as integrated semiconductor circuits ("hardware"), computer-readable instructions organized into one or more programs ("software"), or some combination of hardware and software. For the purposes of this disclosure reference to "logic" shall mean either hardware, software, firmware, or some combination thereof.

Some embodiments not part of the invention provide for on-the-fly performance adjustment techniques for solid state drives. As discussed herein, "on-the-fly" or "dynamic" performance adjustment generally refers performance adjustment without requiring a computing system reboot or Operating System (OS) reboot. Also, such solid state drives may include flash memory (also referred to herein interchangeably as a solid state storage device), Phase Change Memory (PCM), Spin Torque Transfer Random Access Memory (STTRAM), Resistive Random Access Memory, 3D (3-Dimensional) Cross Point Memory, etc. Hence, some embodiments provide methods and/or apparatus to enable dynamic performance control of SSDs. An embodiment not part of the invention enables end-users to dynamically control the performance of SSDs, trading off between performance, reliability, thermal constraints, and/or device lifetime. In one embodiment, a command interface (e.g., via software) allows for making such performance trade-offs on-the-fly, e.g., from within an OS.

In an embodiment, an end-user may utilize techniques/features discussed herein to adjust/tune the performance of a SSD, by enabling SSD over-clocking. Over-clocking generally refers to increasing the operating frequency of a component (such as an SSD) beyond a normal/default operating frequency, e.g., to increase performance. For example, the tuning may be based on OEM (Original Equipment Manufacturer) and/or end-user tolerance to changes in thermal, power, and/or reliability conditions. Such approaches allow for utilizing different characteristics or usage model for SSDs in different types of computing devices to provide a more optimal balance between one or more of performance, reliability, power consumption, thermal conditions, etc.

Moreover, without some embodiments not part of the invention, SSDs used in larger desktop systems with additional power delivery and cooling capability may have to operate within the same constraints of SSDs used in ultra-thin notebooks and their lesser cooling and power delivery capabilities. Also, a file server may have different reliability expectations than a gaming system. To this end, some embodiments not part of the invention allow for a system designer (or savvy user) to have input into these platform tradeoffs. Furthermore, some embodiments provide for a platform-based SSD "Turbo" like capability, e.g., where SSD's performance can be adjusted (also referred to herein as "tuning"), in real-time or during runtime, for one or more (consecutive or non-consecutive) time periods and/or based on various criterion such as: software workload demands, sensor data, and/or environmental conditions. Additionally, Intel® Corporation's Extreme Tuning Utility (XTU) enables end-users to over-clock the Central Processing Unit (CPU), Graphics Processing Unit (GPU), and/or system memory to achieve higher system performance. This utility may be extended in an embodiment to allow for end-users to over-clock their SSDs, e.g., resulting in improved performance for storage I/O (Input/Output) bound workloads. Further, while allowing the ability to over-clock SSDs, some embodiments avoid the potential for extensive data loss (e.g., when a solid state storage device controller stops operating). Moreover, while some embodiments herein discuss techniques applied to SSDs, it is envisioned that the same or similar techniques may also be applied to other types of non-volatile memory devices.

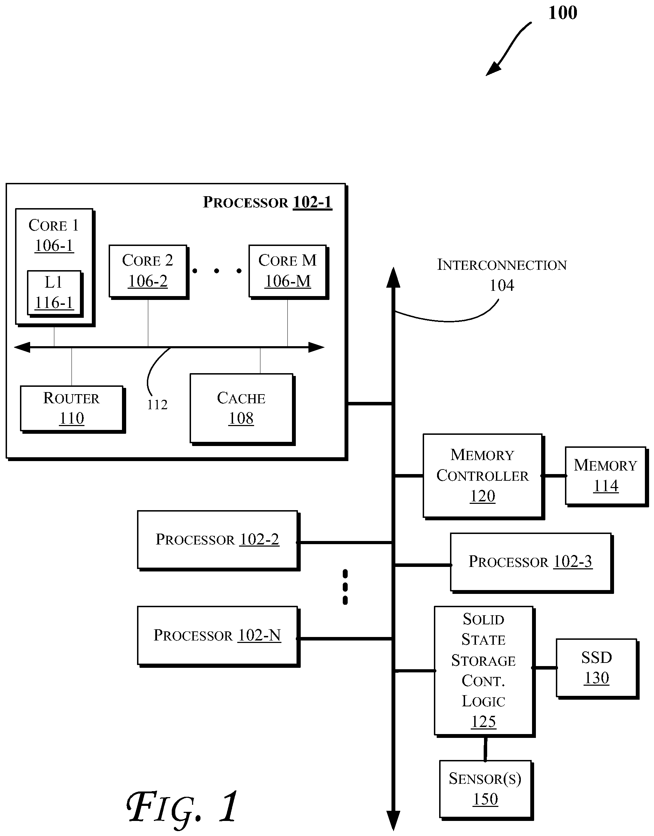

The techniques discussed herein may be provided in various computing systems (e.g., including smart phones, tablets, portable game consoles, Ultra-Mobile Personal Computers (UMPCs), etc.), such as those discussed with reference to Figs. 1-7. More particularly, Fig. 1 illustrates a block diagram of a computing system 100 in which the invention may be used. The system 100 includes one or more processors 102-1 through 102-N (generally referred to herein as "processors 102" or "processor 102"). The processors 102 communicate via an interconnection or bus 104. Each processor may include various components some of which are only discussed with reference to processor 102-1 for clarity. Accordingly, each of the remaining processors 102-2 through 102-N may include the same or similar components discussed with reference to the processor 102-1.

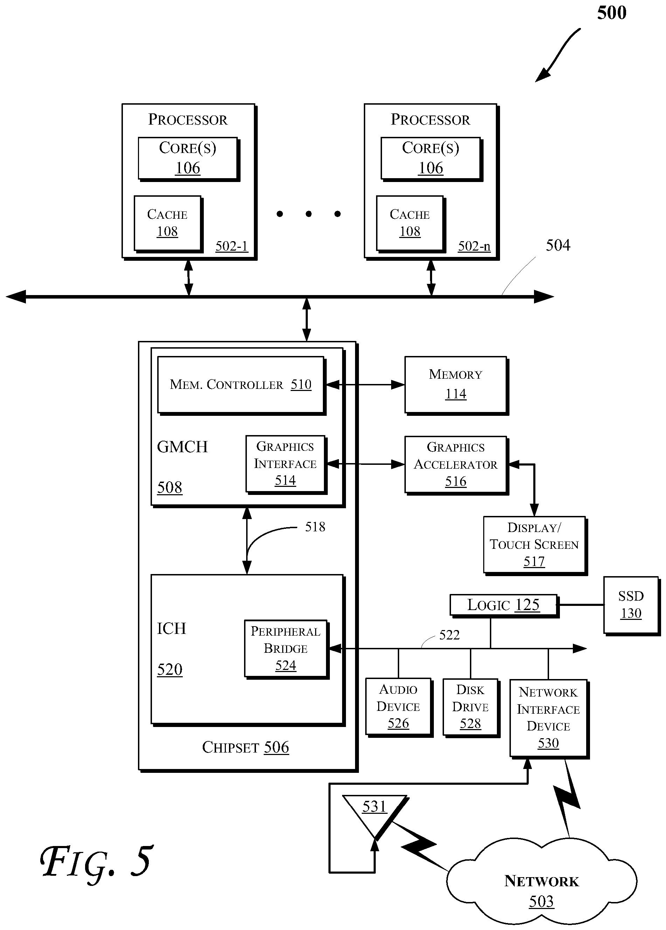

The processor 102-1 may include one or more processor cores 106-1 through 106-M (referred to herein as "cores 106," or more generally as "core 106"), a cache 108 (which may be a shared cache or a private cache), and/or a router 110. The processor cores 106 may be implemented on a single integrated circuit (IC) chip. Moreover, the chip may include one or more shared and/or private caches (such as cache 108), buses or interconnections (such as a bus or interconnection 112), logic 120, memory controllers (such as those discussed with reference to Figs. 5-7), or other components.

The router 110 may be used to communicate between various components of the processor 102-1 and/or system 100. Moreover, the processor 102-1 may include more than one router 110. Furthermore, the multitude of routers 110 may be in communication to enable data routing between various components inside or outside of the processor 102-1.

The cache 108 may store data (e.g., including instructions) that are utilized by one or more components of the processor 102-1, such as the cores 106. For example, the cache 108 may locally cache data stored in a memory 114 for faster access by the components of the processor 102. As shown in Fig. 1, the memory 114 may be in communication with the processors 102 via the interconnection 104. The cache 108 (that may be shared) may have various levels, for example, the cache 108 may be a mid-level cache and/or a last-level cache (LLC). Also, each of the cores 106 may include a level 1 (LI) cache (116-1) (generally referred to herein as "LI cache 116"). Various components of the processor 102-1 may communicate with the cache 108 directly, through a bus (e.g., the bus 112), and/or a memory controller or hub.

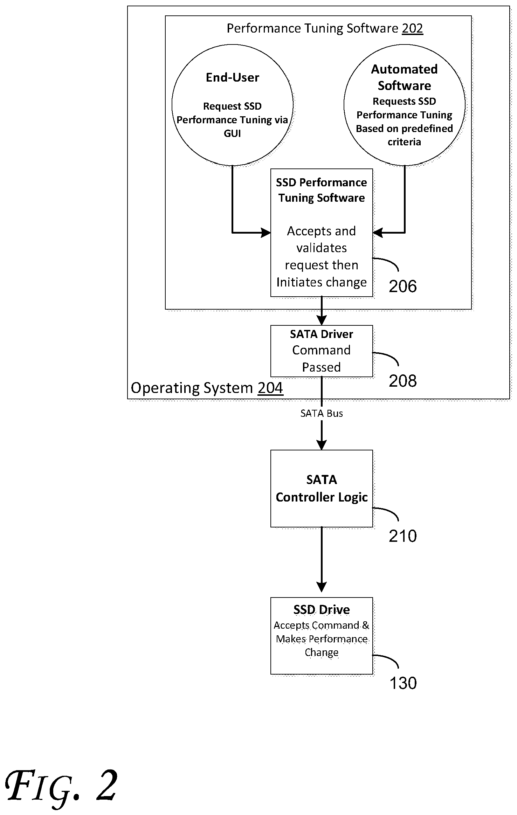

As shown in Fig. 1, memory 114 may be coupled to other components of system 100 through a memory controller 120. Memory 114 may include non-volatile memory such as flash memory (or a solid state storage device, including an SSD), PCM, STTRAM, Resistive Random Access Memory, 3D Cross Point Memory, etc.. Even though the memory controller 120 is shown to be coupled between the interconnection 104 and the memory 114, the memory controller 120 may be located elsewhere in system 100. For example, memory controller 120 or portions of it may be provided within one of the processors 102. According to an embodiment of the invention, system 100 includes logic (e.g., solid state storage controller logic 125) to control access to one or more NVM or Non-Volatile Memory (including one or more solid state storage) devices (such as one or more SSDs 130, further discussed with reference to Fig. 2). The one or more NVM devices may be provided on the same integrated circuit die. Furthermore, even though logic 125 is shown to be directly coupled to the interconnection 104 in Fig. 1, logic 125 can alternatively communicate via a storage bus/interconnect (such as the SATA (Serial Advanced Technology Attachment) bus discussed with reference to Fig. 2) with one or more other components of system 100 (for example where the storage bus is coupled to interconnect 104 via some other logic like a bus bridge, chipset (such as discussed with reference to Figs. 5-6), etc.). Additionally, logic 125 may be incorporated into a memory controller (such as those discussed with reference to Figs. 1 and 5-6) or at least provided on a same integrated circuit device.

Furthermore, logic 125 may be coupled to one or more sensors 150 to receive information (e.g., in the form of one or more bits or signals) to indicate the status of or values detected by the one or more sensors 150. The sensor(s) 150 may be provided proximate to components of system 100 (or other computing systems discussed herein such as those discussed with reference to other figures including 5-7, for example), such as the cores 106, interconnections 104 or 112, components outside of the processor 102, SSD, SSD bus, SATA bus, logic 125, etc., to sense variations in various factors affecting power/thermal behavior of the system/platform, such as temperature, operating frequency, operating voltage, power consumption, and/or inter-core communication activity, etc.

Fig. 2 illustrates a high level flow diagram for tuning an SSD, according to an embodiment. While Fig. 2 discusses tuning of an SSD, the same or similar techniques may also be applied to any type of solid state storage NVM device. As illustrated, performance tuning software 202 (which may be an application running within an OS 204) includes an SSD performance tuning software application 206 that accepts and validates SSD performance tuning request(s) from an end-user (e.g., via a Graphical User Interface (GUI)) and/or from an automated software application (e.g., based on one or more predefined criteria).

At an operation 208, a driver command is passed to initiate the turning/change to the SSD performance (e.g., via a storage device driver such as a Serial Advanced Technology Attachment (SATA) driver). The driver command is passed to a SATA controller logic 210 (e.g., include in a Peripheral Control Hub (PCH) or other hardware) via a SATA bus. In an embodiment, the SATA controller 210 is the same or similar to the logic 125 of Fig. 1. In turn, SSD 130 accepts the command and makes the performance change that apply to the SSD (such as changing the operating frequency of the bus that couples an internal SSD controller to the non-volatile memory cells in the SSD, the non-volatile memory cells, and/or other components of the SSD).

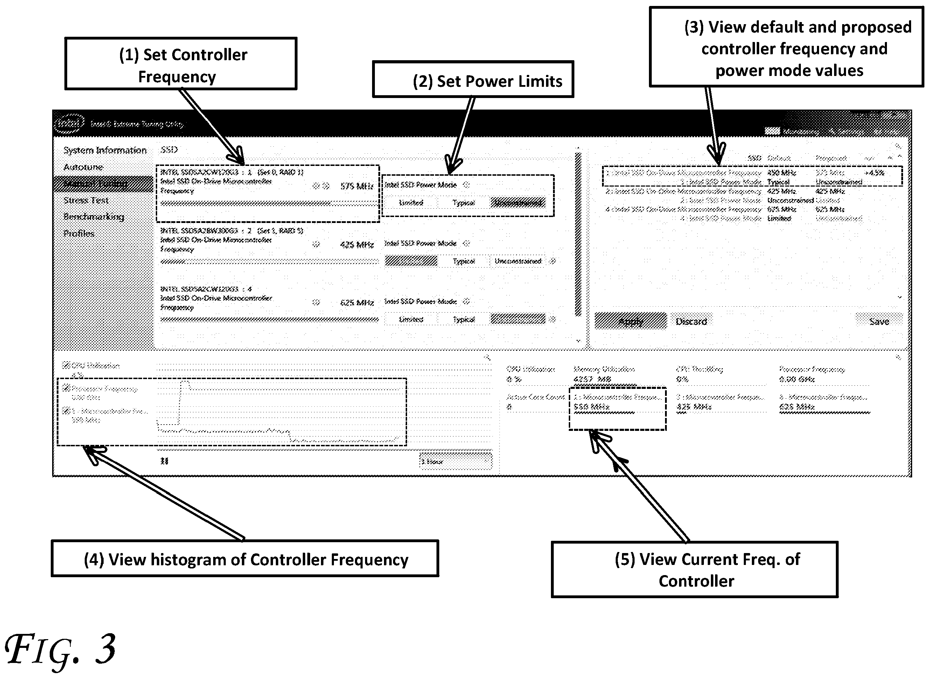

Fig. 3 illustrates a sample GUI to provide software controls to tune an SSD, according to an embodiment. As discussed herein, turning an SSD refers to adjusting the performance of a SSD, for example, by enabling SSD over-clocking. Also, over-clocking generally refers to increasing the operating frequency of a component (such as an SSD, its interface/bus, or the SSD controller logic 125, etc.) beyond a normal/default operating frequency, e.g., to increase performance. For example, the tuning may be based on OEM and/or end-user tolerance to changes in thermal, power, and/or reliability conditions. While Fig. 3 discusses techniques for tuning an SSD, the same or similar techniques may also be applied to other types of solid state storage devices. Fig. 3 illustrates a sample implementation using Intel® Extreme Tuning Utility (XTU) in one embodiment. As shown, the GUI allows for setting of SSD controller frequency (1) such as the operating frequency of the logic 125 of Fig. 1, setting SSD power limits (2), viewing default and proposed SSD controller frequency and power mode values (3), viewing a histogram of the SSD controller frequency over a give time period (4), and/or viewing current SSD controller operating frequency (5).

Moreover, some embodiments not part of the invention provide for on-the-fly adjusting of performance characteristics for solid state storage devices (including SSDs) by providing the ability to make changes without a system or OS reboot. It allows a plurality of real-time tuning options via software and/or hardware communication and control mechanisms to manage dynamic tuning as discussed with reference to Figs. 2-3, for example. In an embodiment not part of the invention, a command interface is provided for detecting configurable options and communicating changes to a solid state storage drive.

For example, Fig. 3 illustrates how a software application can be used to adjust performance characteristics of the SSD. While a sample implementation is discussed with reference to Figs. 2-3, embodiments of the invention can be instantiated through different combinations of services, applications, and background services.

Accordingly, some embodiments enable solid state storage device over-clocking by tuning the frequency of the device controller (e.g., logic 125 of Fig. 1), dynamically scaling the controller logic frequency beyond stock level through an SCT (Smart Command Transport) command (which is transmitted over a SATA bus or another interface, including for example, over the interconnect 104 of Fig. 1), enabling burst power in-rush to storage device safe power limit (e.g., where "in-rush" refers to a peak period of power consumption during burst of data transfer), enabling (e.g., SOC (System On Chip)) power consumption to exceed OEM specified threshold through an API (Application Program Interface), enabling (e.g., NAND and/or NOR, or other types of NVM) flash memory over-clocking by dynamically scaling flash frequency beyond stock level through the SCT command, and/or screening of solid state storage device controllers for highest performance bins by using internal registers (e.g., via segmentation or "bin-ing" of solid state storage device controllers by their determined/assigned upper/maximum operating frequency limit). A "bin" generally refers to a collection of electronic components that are assigned an SKU (Stock Keeping Unit) based on their determined/assigned operating frequency rating.

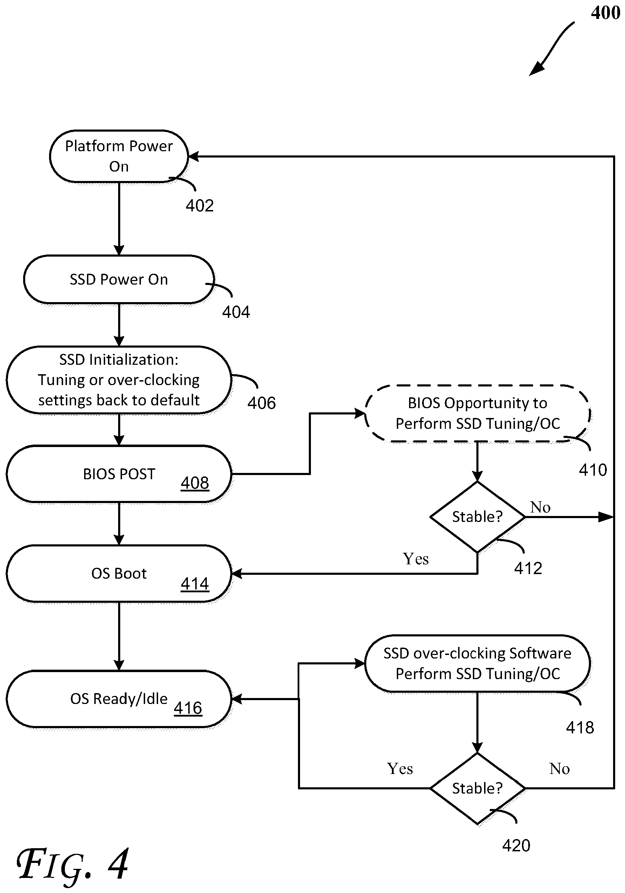

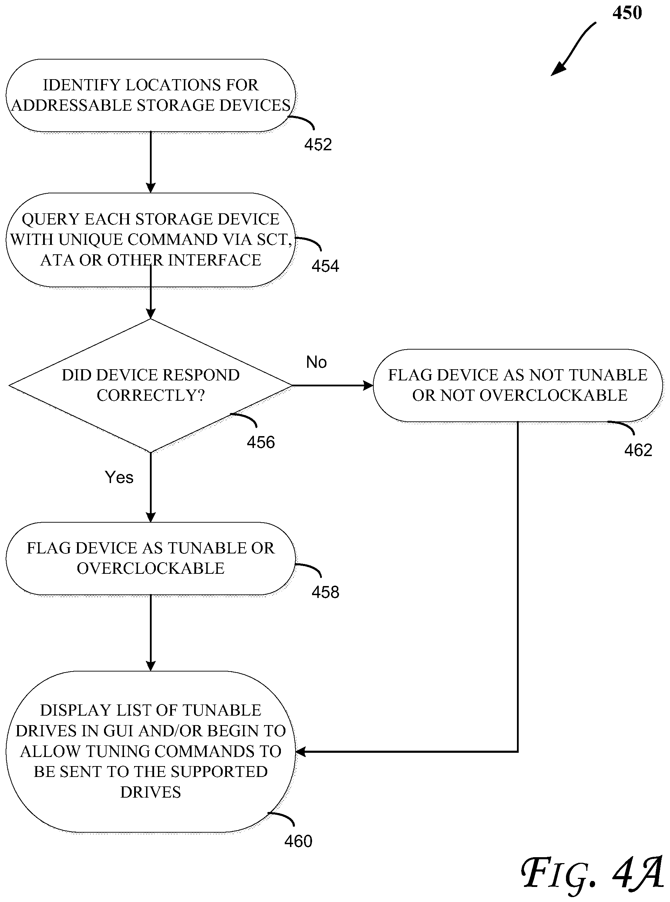

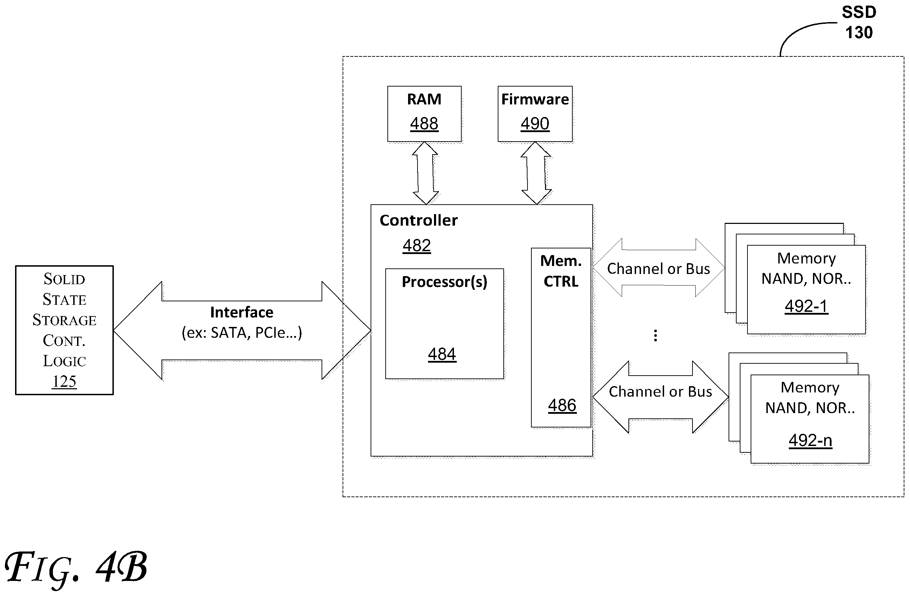

Furthermore, such techniques may be used to enable an "SSD Turbo" feature where platform logic (such as software and/or firmware) can dynamically modify SSD performance to balance/change performance versus battery life in particular form-factors and operating conditions. Also, catastrophic failures (e.g., caused by malicious attacks) may be prevented by providing recovery methods (such as discussed with reference to Fig. 4) and fixed boundaries on input ranges for tuning parameters of SSD performance (such as threshold frequency values for the flash device and/or controller logic 125) to provide further protection, as will be further discussed below. Also, a utility may be provided to reinitialize the drive after failure, e.g., by wiping the drive and making it useable again.

Fig. 4 illustrates a flow diagram of a method 400 to recover from failure. Method 400 may be used to regain stability after failure, e.g., due to selection of overly aggressive tuning parameters when tuning performance of an SSD. While Fig. 4 discusses tuning techniques for an SSD, the same or similar techniques may also be applied to other types of NVM devices. One or more operations of method 400 can be performed by one or more components discussed with reference to the other figures (e.g., the logic 125).

Referring to Fig. 4, after platform power on at operation 402, an SSD is powered on at operation 404. At an operation 406, SSD initialization is performed (e.g., by returning the tuning or over-clocking settings to default values). At an operation 408, BIOS (Basic Input Output System) Power On Self Test (POST) is performed. At an operation 410, the BIOS has an opportunity to perform SSD testing and/or OC (Over-Clocking). An operation 412 determines whether the SSD operations are stable and if not, the system resets by returning to operation 402. Otherwise, method 400 continues with OS boot at operation 414 (e.g., from the SSD or another NVM device). Alternatively, operation 408 may be directly followed by operation 414. At an operation 416, OS is ready and operating (e.g., idle). Operations 418 and/or 420 are performed (once the OS is operational at operation 416) to tune SSD over-clocking/tuning and determine stability of the SSD operations at current settings. If SSD operations become unstable at operation 420, the system resets by returning to operation 402.

Various embodiments use SCT and ATA (Advanced Technology Attachment) commands to communicate with SSDs to invoke the tuning or over-clocking. The SCT command is transmitted via a SATA command sent to an SSD. Table 1 below lists SCT commands that may be used (which may be vendor specific). SCT commands can be used for the NAND timing value, the maximum controller frequency value, and accumulated power value. In an embodiment of the invention, an SSD over-clocking lock command is used to prevent users from over-clocking the drive via software unless explicitly unlocked (e.g., helping prevent malicious code or some users from doing harm). Hence, locking prevents tuning or over-clocking and unlocking allows changes. The locking command causes setting (or clearing depending on implementation) of a lock status bit in some storage device (such as a memory (including memories discussed with reference to Figs. 1 or 5-7), register, memory in the controller logic 125, in firmware, in the SSD, etc.). For additional protection, the range of the accepted values for these items below can be bound/limited.

**Table 1**

| Feature Name | SCT Command Code | ATA Command Code | ATA Address |
|---|---|---|---|
| Controller Logic Frequency Read (or System PLL Timing) | 0xD005 | 0x3F | 0xE0 |
| Controller Logic Frequency Write (or System PLL Timing) | 0xD006 | 0x3F | 0xE0 |
| Power Mode Read/Write | 0xD001 | 0x3F | 0xE0 |
| NAND Timing Read (e.g., Maximum System PLL Timing Value) | 0xD006 | 0x3F | 0xE0 |
| NAND Timing Write (e.g., Accumulated Power Value) | 0xD007 | 0x3F | 0xE0 |
| Drive Over-clocking Lockout | None | 0x3F | 0xE0 |

Furthermore, ATA commands may be used to read the SSD's model/serial numbers and other identification information (e.g., from the ATA addresses in a storage device, firmware, etc.). The temperature of the SSD may also be monitored via ATA command (e.g., via one or more of the sensors 150 of Fig. 1, which may be physically proximate to the SSD, within the SSD, or otherwise thermally coupled to the SSD).

Some embodiments make use of the existing SCT and ATA command protocols; however, new commands are added for the unique tuning features discussed herein (e.g., such as shown in Table 1). The majority of commands used are SCT based commands. For example, with respect to the last line of Table 1, the Drive Over-clocking Lockout command is created (and a half dozen others shown in Table 1) to manage the ability to tune SSD performance on-the-fly and in real-time (rather than via hard coded firmware that SSD manufacturers would use to develop/test their solutions, for example).

Moreover, some embodiments use ATA commands, e.g., for telemetry as inputs to feedback loops where intelligent software dynamically changes tuning parameters. For example, when pushing the boundaries of performance, the storage device may heat-up and ATA commands to retrieve temperature data can be used to help detect this situation and reduce one or more tuning parameters to keep the drive in healthy operating conditions.

Fig. 4A illustrates a flow diagram of a method 450 to determine which drives or storage devices (e.g., SSDs) in a system are capable of being tuned. Method 450 is performed before exposing the option to tune the performance to a user via software or utilities. One or more operations of method 400 can be performed by one or more components discussed with reference to the other figures (e.g., the logic 125).

Referring to Fig. 4A, at an operation 452, locations for addressable storage devices are determined. At an operation 454, each storage device (identified at operation 452) is queried with a unique command (e.g., via SCT/ATA commands or another interface). At an operation 456, if the device responds correctly to the query of operation 454, that device is flagged as tunable at an operation 458. At an operation 460, a list of tunable drives are displayed (e.g., in a Graphical User Interface (GUI)) and/or tuning commands are allowed to be sent to the supported drives. As shown in Fig. 4A, if the device fails to respond at operation 456, an operation 462 flags the device as not tunable and method 450 return to operation 460.

Fig. 4B illustrates a block diagram of various components of an SSD, according to an embodiment. As shown in Fig. 4B, SSD 130 includes a controller logic 482 (which in turn includes one or more processor cores or processors 484 and a memory controller logic 486), Random Access Memory (RAM) 488, firmware storage 490, and one or more memory modules 492-1 to 492-n (which may include NAND, NOR, or other types of non-volatile memory). Memory modules 492-1 to 492-n are coupled to the memory controller logic 486 via one or more memory channels or busses. Also, SSD 130 communicates with logic 125 via an interface (such as a SATA, PCIe (Peripheral Component Interconnect express), etc. interface).

Moreover, tuning may be initiated by system software (e.g., application, utility, etc.) or system BIOS. Also, tuning may be initiated manually (e.g., via a user GUI) or automatically (e.g., by intelligent logic, including software and/or firmware). Commands to initiate this tuning may utilize the SCT or ATA protocols such as discussed with reference to Table 1 above. For example, when initiated from within the OS, the commands pass through the storage device driver (which may be stored in memory 114 of Fig. 1, for example), the system interface, SATA, or PCIe bus, to the storage device (e.g., SSD 130). Controller logic 482 on the storage device then executes firmware code to parse and execute the commands.

Controller logic 482 can change its own clock/operating frequency by changing the ratio (a.k.a., multiplier) to its existing clock. For example, if the controller's nominal clock is 33.3MHz and normally fixed ratio is 3 for a 100MHz effective frequency, changing the ratio to 4 would provide a higher (e.g., 133MHz) clock frequency which can accelerate performance. Similarly, the clock/operating frequency of one or more of the bus(es) or channel(s) coupled between the memory modules 492-1 to 492-n and memory controller logic 786, as well as operating/clock frequencies of one or more of the memory modules 492-1 to 492-n may be changed. Moreover, while an example of changing ratios is provided, it may also be possible to change the nominal clock frequency directly instead (or in addition thereto). In such cases, the flow would be similar and may optionally include communication/control of an external clock source.

The knobs used may include one or more of: (a) controller logic 125 frequency , e.g., derived from system PLL (Phase Locked Loop) timing (e.g., between about 400MHz to 625MHz); (b) SSD bus frequency that may include the SATA bus coupled to the SSD, an internal bus in the SSD that is coupled to the non-volatile memory cells of the SSD, etc. (e.g., switching between about 83MHz and 100MHz); and/or (c) power mode (such as low, typical, unconstrained, etc.).

Additionally, the values being monitored may include one or more of: temperature, controller logic 125 frequency, flash memory bus frequency (e.g., which may be the same as controller logic 125 frequency), solid state storage device operating frequency, and/or accumulated power.

Furthermore, a platform-based solid state storage device "Turbo" like capability may be provided, e.g., where solid state storage devices performance can be increased, e.g., in real-time, for one or more (consecutive or non-consecutive) time periods and/or based on various criterion such as: software workload demands, sensor data, and/or environmental conditions. The SSD Turbo feature can be built by putting the SSD tuning and over-clocking building blocks discussed herein together. Hence, some examples provide a framework, for the first time, which allows dynamic changes to SSD performance, including monitoring frequency(ies), power consumption, and closed-loop parameters. In this fashion, the general principle of Turbo may be applied to SSDs, e.g., speeding up SSDs to meet peak demands and slowing down SSDs (utilizing lower power levels) when the demand is reduced.

Fig. 5 illustrates a block diagram of a computing system 500 in which the invention can be used. The computing system 500 may include one or more central processing unit(s) (CPUs) 502 or processors that communicate via an interconnection network (or bus) 504. The processors 502 may include a general purpose processor, a network processor (that processes data communicated over a computer network 503), an application processor (such as those used in cell phones, smart phones, etc.), or other types of a processor (including a reduced instruction set computer (RISC) processor or a complex instruction set computer (CISC)). Various types of computer networks 503 may be utilized including wired (e.g., Ethernet, Gigabit, Fiber, etc.) or wireless networks (such as cellular, 3G (Third-Generation Cell-Phone Technology or 3rd Generation Wireless Format (UWCC)), 5G, Low Power Embedded (LPE), etc.). Moreover, the processors 502 may have a single or multiple core design. The processors 502 with a multiple core design may integrate different types of processor cores on the same integrated circuit (IC) die. Also, the processors 502 with a multiple core design may be implemented as symmetrical or asymmetrical multiprocessors.

One or more of the processors 502 may be the same or similar to the processors 102 of Fig. 1. For example, one or more of the processors 502 may include one or more of the cores 106 and/or cache 108. Also, the operations discussed with reference to Figs. 1-4 may be performed by one or more components of the system 500.

A chipset 506 may also communicate with the interconnection network 504. The chipset 506 may include a graphics and memory control hub (GMCH) 508. The GMCH 508 may include a memory controller 510 (which may be the same or similar to the memory controller 120 of Fig. 1) that communicates with the memory 114. The memory 114 may store data, including sequences of instructions that are executed by the CPU 502, or any other device included in the computing system 500. Also, system 500 includes logic 125 and SSD 130 (which may be coupled to system 500 via bus 522 such as illustrated, via other interconnects such as 504, where logic 125 is incorporated into chipset 506, etc.). The memory 114 may include one or more volatile storage (or memory) devices such as random access memory (RAM), dynamic RAM (DRAM), synchronous DRAM (SDRAM), static RAM (SRAM), or other types of storage devices. Nonvolatile memory may also be utilized such as a hard disk, flash, PCM, 3D Cross Point Memory, Resistive Random Access Memory, and STTRAM Additional devices may communicate via the interconnection network 504, such as multiple CPUs and/or multiple system memories.

The GMCH 508 may also include a graphics interface 514 that communicates with a graphics accelerator 516. The graphics interface 514 may communicate with the graphics accelerator 516 via an accelerated graphics port (AGP). A display 517 (such as a flat panel display, touch screen, etc.) may communicate with the graphics interface 514 through, for example, a signal converter that translates a digital representation of an image stored in a storage device such as video memory or system memory into display signals that are interpreted and displayed by the display. The display signals produced by the display device may pass through various control devices before being interpreted by and subsequently displayed on the display 517.

A hub interface 518 may allow the GMCH 508 and an input/output control hub (ICH) 520 to communicate. The ICH 520 may provide an interface to I/O devices that communicate with the computing system 500. The ICH 520 may communicate with a bus 522 through a peripheral bridge (or controller) 524, such as a peripheral component interconnect (PCI) bridge, a universal serial bus (USB) controller, or other types of peripheral bridges or controllers. The bridge 524 may provide a data path between the CPU 502 and peripheral devices. Other types of topologies may be utilized. Also, multiple buses may communicate with the ICH 520, e.g., through multiple bridges or controllers. Moreover, other peripherals in communication with the ICH 520 may include integrated drive electronics (IDE) or small computer system interface (SCSI) hard drive(s), USB port(s), a keyboard, a mouse, parallel port(s), serial port(s), floppy disk drive(s), digital output support (e.g., digital video interface (DVI)), or other devices.

The bus 522 may communicate with an audio device 526, one or more disk drive(s) 528, and a network interface device 530 (which is in communication with the computer network 503, e.g., via a wired or wireless interface). As shown, the network interface device 530 may be coupled to an antenna 531 to wirelessly (e.g., via an Institute of Electrical and Electronics Engineers (IEEE) 802.11 interface (including IEEE 802.11a/b/g/n, etc.), cellular interface, 3G, 5G, LPE, etc.) communicate with the network 503. Other devices may communicate via the bus 522. Also, various components (such as the network interface device 530) may communicate with the GMCH 508. In addition, the processor 502 and the GMCH 508 may be combined to form a single chip. Furthermore, the graphics accelerator 516 may be included within the GMCH 508.

Furthermore, the computing system 500 may include volatile and/or nonvolatile memory (or storage). For example, nonvolatile memory may include one or more of the following: read-only memory (ROM), programmable ROM (PROM), erasable PROM (EPROM), electrically EPROM (EEPROM), a disk drive (e.g., 528), a floppy disk, a compact disk ROM (CD-ROM), a digital versatile disk (DVD), flash memory, a magneto-optical disk, or other types of nonvolatile machine-readable media that are capable of storing electronic data (e.g., including instructions).

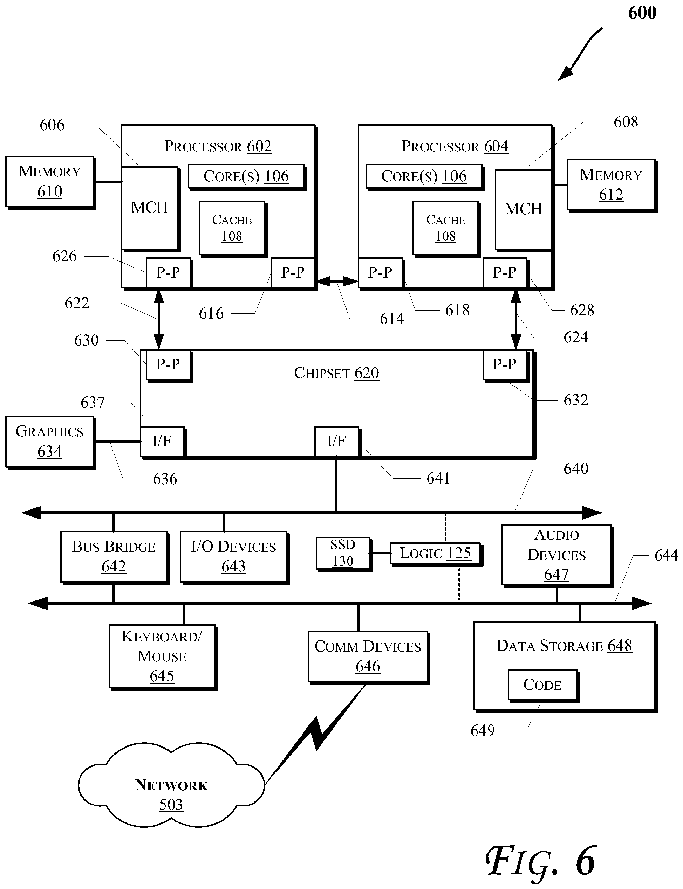

Fig. 6 illustrates a computing system 600 that is arranged in a point-to-point (PtP) configuration. In particular, Fig. 6 shows a system where processors, memory, and input/output devices are interconnected by a number of point-to-point interfaces. The operations discussed with reference to Figs. 1-5 may be performed by one or more components of the system 600.

As illustrated in Fig. 6, the system 600 may include several processors, of which only two, processors 602 and 604 are shown for clarity. The processors 602 and 604 may each include a local memory controller hub (MCH) 606 and 608 to enable communication with memories 610 and 612. The memories 610 and/or 612 may store various data such as those discussed with reference to the memory 114 of Figs. 1 and/or 5. Also, MCH 606 and 608 may include the memory controller 120. Furthermore, system 600 includes logic 125 and SSD 130 (which may be coupled to system 600 via bus 640/644 such as illustrated, via other point-to-point connections to the processor(s) 602/604 or chipset 620, where logic 125 is incorporated into chipset 620, etc.).

The processors 602 and 604 may be one of the processors 502 discussed with reference to Fig. 5. The processors 602 and 604 may exchange data via a point-to-point (PtP) interface 614 using PtP interface circuits 616 and 618, respectively. Also, the processors 602 and 604 may each exchange data with a chipset 620 via individual PtP interfaces 622 and 624 using point-to-point interface circuits 626, 628, 630, and 632. The chipset 620 may further exchange data with a high-performance graphics circuit 634 via a high-performance graphics interface 636, e.g., using a PtP interface circuit 637. As discussed with reference to Fig. 5, the graphics interface 636 may be coupled to a display device (e.g., display 517).

As shown in Fig. 6, one or more of the cores 106 and/or cache 108 of Fig. 1 may be located within the processors 602 and 604. Other implementations may exist in other circuits, logic units, or devices within the system 600 of Fig. 6. Furthermore, other implementations may be distributed throughout several circuits, logic units, or devices illustrated in Fig. 6.

The chipset 620 may communicate with a bus 640 using a PtP interface circuit 641. The bus 640 may have one or more devices that communicate with it, such as a bus bridge 642 and I/O devices 643. Via a bus 644, the bus bridge 642 may communicate with other devices such as a keyboard/mouse 645, communication devices 646 (such as modems, network interface devices, or other communication devices that may communicate with the computer network 503, as discussed with reference to network interface device 530 for example, including via antenna 531), audio I/O device, and/or a data storage device 648. The data storage device 648 may store code 649 that may be executed by the processors 602 and/or 604.

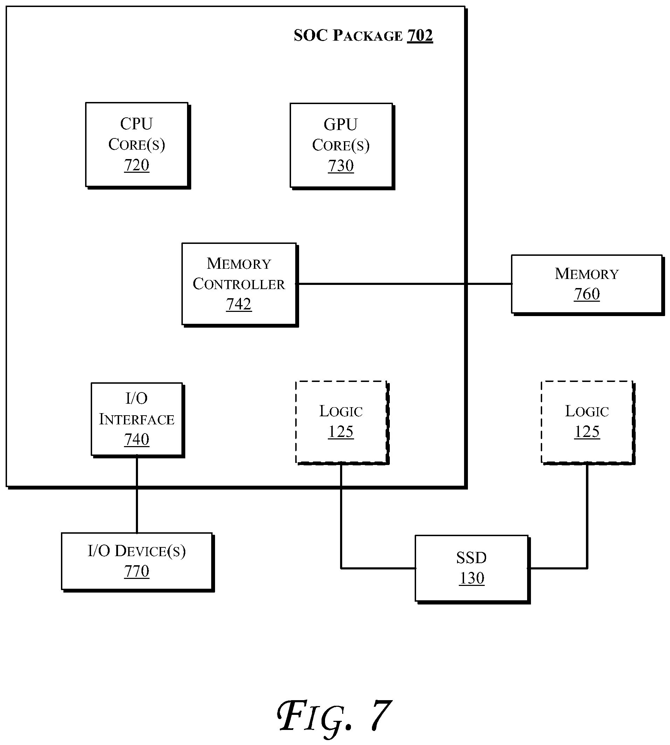

One or more of the components discussed herein can be embodied as a System On Chip (SOC) device. Fig. 7 illustrates a block diagram of an SOC package. As illustrated in Fig. 7, SOC 702 includes one or more Central Processing Unit (CPU) cores 720, one or more Graphics Processor Unit (GPU) cores 730, an Input/Output (I/O) interface 740, and a memory controller 742. Various components of the SOC package 702 may be coupled to an interconnect or bus such as discussed herein with reference to the other figures. Also, the SOC package 702 may include more or less components, such as those discussed herein with reference to the other figures. Further, each component of the SOC package 720 may include one or more other components, e.g., as discussed with reference to the other figures herein. SOC package 702 (and its components) is provided on one or more Integrated Circuit (IC) die, e.g., which are packaged onto a single semiconductor device.

As illustrated in Fig. 7, SOC package 702 is coupled to a memory 760 (which may be similar to or the same as memory discussed herein with reference to the other figures) via the memory controller 742. The memory 760 (or a portion of it) can be integrated on the SOC package 702.

The I/O interface 740 may be coupled to one or more I/O devices 770, e.g., via an interconnect and/or bus such as discussed herein with reference to other figures. I/O device(s) 770 may include one or more of a keyboard, a mouse, a touchpad, a display, an image/video capture device (such as a camera or camcorder/video recorder), a touch screen, a speaker, or the like. Furthermore, SOC package 702 may include/integrate the logic 125. Alternatively, the logic 125 may be provided outside of the SOC package 702 (i.e., as a discrete logic).

In various embodiments and examples of the invention, the operations discussed herein, e.g., with reference to Figs. 1-7, may be implemented as hardware (e.g., circuitry), software, firmware, microcode, or combinations thereof, which may be provided as a computer program product, e.g., including a tangible (e.g., non-transitory) machine-readable or computer-readable medium having stored thereon instructions (or software procedures) used to program a computer to perform a process discussed herein. Also, the term "logic" may include, by way of example, software, hardware, or combinations of software and hardware. The machine-readable medium may include a storage device such as those discussed with respect to Figs. 1-7.

Additionally, such tangible computer-readable media may be downloaded as a computer program product, wherein the program may be transferred from a remote computer (e.g., a server) to a requesting computer (e.g., a client) by way of data signals (such as in a carrier wave or other propagation medium) via a communication link (e.g., a bus, a modem, or a network connection).

## Claims

1. An apparatus comprising:
controller logic (125), wherein the controller logic (125) is to cause a change in an operational frequency of one or more non-volatile memory devices (130) in response to a command, and
one or more non-volatile memory devices (130) coupled to the controller logic (125), **characterized in that**
the controller logic (125) is to control access to one or more non-volatile memory devices (130),
the controller logic (125) is to receive an over-clocking lock command, wherein the over-clocking lock command sets a lock status bit in a memory of the controller logic (125), the lock status bit indicating whether over-clocking of the one or more non-volatile memory devices (130) to an operating frequency beyond a normal/default operating frequency of the one or more non-volatile memory devices (130) in response to said command is allowed or to be prevented, and
the controller logic (125) is to cause, in response to the command and the lock status bit allowing over-clocking the operational frequency of the one or more non-volatile memory devices (130), a change in the operational frequency of the one or more non-volatile memory devices (130) to an operational frequency beyond a normal/default operating frequency of the one or more non-volatile memory devices (130),
wherein over-clocking refers to increasing the operating frequency of the one or more non-volatile memory devices (130) beyond a normal/default operating frequency, and the command and the over-clocking lock command are Smart Command Transport, SCT, commands transported via the Advanced Technology Attachment, ATA, protocol.

2. The apparatus of claim 1, wherein the one or more non-volatile memory devices (130) are to comprise one or more of: a solid state storage device, a phase change memory, a 3D cross point memory, a resistive random access memory, and a spin torque transfer random access memory.

3. The apparatus of claim 1 or 2, wherein the controller logic (125) is to refrain from causing the change in response to a value of the lock status bit.

4. A method comprising:
coupling one or more non-volatile memory devices (130) to a controller logic (125);
**characterized by**:
controlling access to one or more non-volatile memory devices (130) via the controller logic (125);
accepting, by the one or more non-volatile memory devices (130), the command;
receiving, by the controller logic (125), an over-clocking lock command, wherein the over-clocking lock command sets a lock status bit in a memory of the controller logic (125), the lock status bit indicating whether over-clocking of the one or more non-volatile memory devices (130) to an operating frequency beyond a normal/default operating frequency of the one or more non-volatile memory devices (130) in response to said command is allowed or to be prevented,
causing, by the controller logic (125) and in response to the command and the lock status bit allowing over-clocking the operational frequency of the one or more non-volatile memory devices (130), a change in the operational frequency of the one or
more non-volatile memory devices (130) to an operational frequency beyond a normal/default operating frequency of the one or more non-volatile memory devices (130),
wherein over-clocking refers to increasing the operating frequency of the one or more non-volatile memory devices (130) beyond a normal/default operating frequency; and wherein the command and the over-clocking lock command are Smart Command Transport, SCT, commands transported via the Advanced Technology Attachment, ATA, protocol.

5. The method of claim 4, wherein the one or more non-volatile memory devices (130) comprise one or more of: a solid state storage device, a phase change memory, a 3D cross point memory, a resistive random access memory, and a spin torque transfer random access memory.

6. The method of claim 4 or 5, further comprising the controller logic (125) refraining from causing the change in response to a value of the lock status bit.

7. The method of any of claims 4 to 6, further comprising the controller logic (125) causing a system reset in response to detection of an unstable operating condition associated with the one or more non-volatile memory devices.

8. Machine-readable storage including machine-readable instructions which, when executed by an apparatus, cause the apparatus to perform the method as claimed in any of claims 4-7.

## Patentansprüche

1. Gerät, umfassend:
Steuerlogik (125), wobei die Steuerlogik (125) eine Veränderung einer Betriebsfrequenz einer oder mehrerer nichtflüchtiger Speichervorrichtungen (130) als Reaktion auf einen Befehl bewirken soll, und
eine oder mehrere nichtflüchtige Speichervorrichtungen (130), die an die Steuerlogik (125) gekoppelt sind, **dadurch gekennzeichnet, dass**
die Steuerlogik (125) den Zugang zu einer oder mehreren nichtflüchtigen Speichervorrichtungen (130) steuern soll, die Steuerlogik (125) einen Übertaktung-Sperrbefehl empfangen soll, wobei der Übertaktung-Sperrbefehl ein Sperrstatus-Bit in einem Speicher der Steuerlogik (125) setzt, wobei das Sperrstatus-Bit angibt, ob Übertaktung der einen oder mehreren nichtflüchtigen Speichervorrichtungen (130) auf eine Betriebsfrequenz über eine normale/Standard-Betriebsfrequenz der einen oder mehreren nichtflüchtigen Speichervorrichtungen (130) hinaus als Reaktion auf den Befehl gestattet ist oder verhindert werden soll, und
die Steuerlogik (125) als Reaktion auf den Befehl und das Sperrstatus-Bit, das Übertaktung der Betriebsfrequenz der einen oder mehreren nichtflüchtigen Speichervorrichtungen (130) gestattet, eine Veränderung der Betriebsfrequenz der einen oder mehreren nichtflüchtigen Speichervorrichtungen (130) auf eine Betriebsfrequenz über eine normale/Standard-Betriebsfrequenz der einen oder mehreren nichtflüchtigen Speichervorrichtungen (130) hinaus bewirken soll,
wobei Übertaktung auf Erhöhung der Betriebsfrequenz der einen oder mehreren nichtflüchtigen Speichervorrichtungen (130) über eine normale/Standard-Betriebsfrequenz hinaus verweist und der Befehl und der Übertaktung-Sperrbefehl Smart Command Transport- bzw. SCT-Befehle sind, die über das Advanced Technology Attachment- bzw. ATA-Protokoll transportiert werden.

2. Gerät nach Anspruch 1, wobei die eine oder mehreren nichtflüchtigen Speichervorrichtungen (130) eines oder mehrere von Folgendem umfassen sollen: eine Festkörper-Speichervorrichtung, ein Phasenwechselspeicher, ein 3D-Kreuzpunktspeicher, ein resistiver Direktzugriffspeicher und ein Spin-Torque-Transfer-Direktzugriffspeicher.

3. Gerät nach Anspruch 1 oder 2, wobei die Steuerlogik (125) es unterlassen soll, die Veränderung als Reaktion auf einen Wert des Sperrstatus-Bits zu bewirken.

4. Verfahren, umfassend:
Koppeln einer oder mehrerer nichtflüchtiger Speichervorrichtungen (130) an eine Steuerlogik (125);
**gekennzeichnet durch**:
Steuern des Zugangs zu einer oder mehreren nichtflüchtigen Speichervorrichtungen (130) über die Steuerlogik (125);
Annehmen, durch die eine oder mehreren nichtflüchtigen Speichervorrichtungen (130), des Befehls;
Empfangen, durch die Steuerlogik (125), eines Übertaktung-Sperrbefehls, wobei der Übertaktung-Sperrbefehl ein Sperrstatus-Bit in einem Speicher der Steuerlogik (125) setzt, wobei das Sperrstatus-Bit angibt, ob Übertaktung der einen oder mehreren nichtflüchtigen Speichervorrichtungen (130) auf eine Betriebsfrequenz über eine normale/Standard-Betriebsfrequenz der einen oder mehreren nichtflüchtigen Speichervorrichtungen (130) hinaus als Reaktion auf den Befehl gestattet ist oder verhindert werden soll,
Bewirken, durch die Steuerlogik (125) und als Reaktion auf den Befehl und das Sperrstatus-Bit, das Übertaktung der Betriebsfrequenz der einen oder mehreren nichtflüchtigen Speichervorrichtungen (130) gestattet, einer Veränderung der Betriebsfrequenz der einen oder mehreren nichtflüchtigen Speichervorrichtungen (130) auf eine Betriebsfrequenz über eine normale/Standard-Betriebsfrequenz der einen oder mehreren nichtflüchtigen Speichervorrichtungen (130) hinaus,
wobei Übertaktung auf Erhöhung der Betriebsfrequenz der einen oder mehreren nichtflüchtigen Speichervorrichtungen (130) über eine normale/Standard-Betriebsfrequenz hinaus verweist; und
wobei der Befehl und der Übertaktung-Sperrbefehl Smart Command Transport- bzw. SCT-Befehle sind, die über das Advanced Technology Attachment- bzw. ATA-Protokoll transportiert werden.

5. Verfahren nach Anspruch 4, wobei die eine oder mehreren nichtflüchtigen Speichervorrichtungen (130) eines oder mehrere von Folgendem umfassen: eine Festkörper-Speichervorrichtung, ein Phasenwechselspeicher, ein 3D-Kreuzpunktspeicher, ein resistiver Direktzugriffspeicher und ein Spin-Torque-Transfer-Direktzugriffspeicher.

6. Verfahren nach Anspruch 4 oder 5, ferner umfassend, dass die Steuerlogik (125) es unterlässt, die Veränderung als Reaktion auf einen Wert des Sperrstatus-Bits zu bewirken.

7. Verfahren nach einem der Ansprüche 4 bis 6, ferner umfassend, dass die Steuerlogik (125) eine Systemrücksetzung als Reaktion auf Detektion eines instabilen Betriebszustands, der mit der einen oder den mehreren nichtflüchtigen Speichervorrichtungen assoziiert ist, bewirkt.

8. Maschinenlesbarer Speicher, der maschinenlesbare Anweisungen enthält, die, wenn sie durch ein Gerät ausgeführt werden, das Gerät veranlassen, das Verfahren nach einem der Ansprüche 4-7 durchzuführen.

## Revendications

1. Appareil comprenant :
une logique de contrôleur (125), la logique de contrôleur (125) servant à amener un changement dans une fréquence opérationnelle d'un ou plusieurs dispositifs de mémoire non volatile (130) en réponse à une commande, et
un ou plusieurs dispositifs de mémoire non volatile (130) couplés à la logique de contrôleur (125), **caractérisé en ce que :**
la logique de contrôleur (125) sert à contrôler l'accès à un ou plusieurs dispositifs de mémoire non volatile (130),
la logique de contrôleur (125) sert à recevoir une commande de verrouillage par surcadençage, la commande de verrouillage par surcadençage définit un bit d'état de verrouillage dans une mémoire de la logique de contrôleur (125), le bit d'état de verrouillage indiquant si un surcadençage de l'un ou des plusieurs dispositifs de mémoire non volatile (130) par rapport à une fréquence de fonctionnement au-delà d'une fréquence de fonctionnement normale/par défaut de l'un du ou des plusieurs dispositifs de mémoire non volatile (130) en réponse à ladite commande est autorisé ou doit être évité, et
la logique de contrôleur (125) sert à amener, en réponse à la commande et au bit d'état de verrouillage permettant un surcadençage de la fréquence opérationnelle de l'un ou des plusieurs dispositifs de mémoire non volatile (130), un changement dans la fréquence opérationnelle de l'un ou des plusieurs dispositifs de mémoire non volatile (130) par rapport à une fréquence opérationnelle au-delà d'une fréquence de fonctionnement normale/par défaut de l'un ou des plusieurs dispositifs de mémoire non volatile (130),
dans lequel un surcadençage fait référence à l'augmentation de la fréquence de fonctionnement de l'un ou des plusieurs dispositifs de mémoire non volatile (130) au-delà d'une fréquence de fonctionnement normale/par défaut, et la commande ainsi que la commande de verrouillage par surcadençage sont des commandes de transport de commandes intelligentes, SCT, transportées par le biais du protocole d'attachement de technologie avancée, ATA.

2. Appareil selon la revendication 1, dans lequel le ou les plusieurs dispositifs de mémoire non volatile (130) doivent comprendre un ou plusieurs des éléments suivants : un dispositif de stockage à semi-conducteurs, une mémoire de changement de phase, une mémoire à points de croisement 3D, une mémoire vive résistive et une mémoire vive à transfert de couple par rotation.

3. Appareil selon la revendication 1 ou 2, dans lequel la logique de contrôleur (125) sert à s'abstenir de provoquer le changement en réponse à une valeur du bit d'état de verrouillage.

4. Procédé comprenant :
le couplage d'un ou plusieurs dispositifs de mémoire non volatile (130) à une logique de contrôleur (125) ;
**caractérisé par** :
le contrôle d'accès à un ou plusieurs dispositifs de mémoire non volatile (130) par l'intermédiaire de la logique de contrôleur (125) ;
l'acceptation, par le ou les dispositifs de mémoire non volatile (130), de la commande ;
la réception, par la logique de contrôleur (125), d'une commande de verrouillage par surcadençage, la commande de verrouillage par surcadençage définissant un bit d'état de verrouillage dans une mémoire de la logique de contrôleur (125), le bit d'état de verrouillage indiquant si un surcadençage de l'un ou des plusieurs dispositifs de mémoire non volatile (130) par rapport à une fréquence de fonctionnement au-delà d'une fréquence de fonctionnement normale/par défaut de l'un du ou des plusieurs dispositifs de mémoire non volatile (130) en réponse à ladite commande est autorisé ou doit être évité,
le fait d'amener, par la logique de contrôleur (125) et en réponse à la commande et au bit d'état de verrouillage permettant un surcadençage de la fréquence opérationnelle de l'un ou des plusieurs dispositifs de mémoire non volatile (130), un changement dans la fréquence opérationnelle de l'un ou des plusieurs dispositifs de mémoire non volatile (130) par rapport à une fréquence opérationnelle au-delà d'une fréquence de fonctionnement normale/par défaut de l'un ou des plusieurs dispositifs de mémoire non volatile (130),
dans lequel un surcadençage fait référence à l'augmentation de la fréquence de fonctionnement de l'un ou des plusieurs dispositifs de mémoire non volatile (130) au-delà d'une fréquence de fonctionnement normale/par défaut ; et
dans lequel la commande et la commande de verrouillage par surcadençage sont des commandes de transport de commandes intelligentes, SCT, transportées par le biais du protocole d'attachement de technologie avancée, ATA.

5. Procédé selon la revendication 4, dans lequel le ou les plusieurs dispositifs de mémoire non volatile (130) comprennent un ou plusieurs des éléments suivants : un dispositif de stockage à semi-conducteurs, une mémoire de changement de phase, une mémoire à points de croisement 3D, une mémoire vive résistive et une mémoire vive à transfert de couple par rotation.

6. Procédé selon la revendication 4 ou 5, comprenant en outre la logique de contrôleur (125) s'abstenant de provoquer le changement en réponse à une valeur du bit d'état de verrouillage.

7. Procédé selon l'une quelconque des revendications 4 à 6, comprenant en outre la logique de contrôleur (125) amenant une réinitialisation du système en réponse à la détection d'une condition de fonctionnement instable associée à l'un ou aux plusieurs dispositifs de mémoire non volatile.

8. Stockage lisible par machine comprenant des instructions lisibles par machine qui, lorsqu'elles sont exécutées par un appareil, amènent l'appareil à mettre en œuvre le procédé selon l'une quelconque des revendications 4 à 7.
